# FASCICULE DE BREVET EUROPEEN

(11) **EP 2 504 176 B1**
(45) Date de publication et mention de la délivrance du brevet: **19.03.2014**
(21) Numéro de dépôt: 10793000.0
(22) Date de dépôt: 17.11.2010
(51) Int. Cl.: B60B 1/02, B60B 21/02, B60B 21/06, B60B 27/02, B60B 5/02, B60B 1/04

(54) **ROUE COMPOSITE, NOTAMMENT POUR UN CYCLE, ET PROCEDE DE FABRICATION D'UNE TELLE ROUE**
RAD AUS FASERVERBUNDWERKSTOFF, INSBESONDERE FÜR EIN FAHRRAD, SOWIE HERSTELLVERFAHREN FÜR EIN SOLCHES RAD
COMPOSITE WHEEL, IN PARTICULAR FOR A CYCLE, AND METHOD FOR MANUFACTURING SUCH A WHEEL

(30) Priorité: 25.11.2009 FR 0958346
(43) Date de publication de la demande: 03.10.2012
(73) Titulaire: Corima, 26270 Loriol sur Drome (FR)
(72) Inventeur: MARTIN, Pierre-Jean, F-26270 Loriol-sur-Drome (FR); DUPONT, Thomas, F-26270 Loriol-sur-Drome (FR)
(74) Mandataire: Thibault, Jean-Marc
(86) Numéro de dépôt international: PCT/FR2010/052436
(87) Numéro de publication internationale: WO 2011/064485

(56) Documents cités:
- EP-A1- 1 764 233
- EP-A1- 1 800 897
- EP-A1- 1 985 434
- EP-A2- 1 759 880
- DE-A1-102007 036 065
- DE-A1-102008 007 722
- FR-A1- 2 924 380
- FR-A1- 2 933 030

## Description

La présente invention concerne le domaine de la conception et de la réalisation de matériels en matériaux composites à haute performance pour la pratique sportive, et plus particulièrement pour la pratique du cyclisme.

L'invention concerne plus particulièrement une nouvelle roue de bicyclette dont la jante, les rayons et les corps de moyeu sont réalisés en matériau composite, notamment à base de fibres de carbone.

Dans le domaine du cyclisme, l'amélioration des performances des pratiquants, professionnels ou amateurs, est essentiellement liée à l'amélioration technique des matériels utilisés. Cette amélioration technique des matériels dépend principalement des gains réalisés sur la masse de chaque composant des bicyclettes, leur rigidité et leur aérodynamisme.

Pour ce qui concerne les roues de bicyclettes, les principaux critères de performances sont une grande rigidité, une faible masse et une faible inertie en rotation.

Les paramètres de rigidité et de masse ont depuis de longues années été améliorés par l'utilisation de matériaux composites à base de fibres de carbone notamment pour la réalisation des jantes et des moyeux de roues.

Jusqu'à récemment encore, les rayons de roues étaient quant à eux toujours réalisés en métal. Pour augmenter la rigidité des roues équipées de tels rayons, ces derniers sont très souvent précontraints en tension, les tensions de précontraintes pouvant atteindre 1800 Newton. Cependant, l'application de telles contraintes sur les rayons exige alors un renforcement des épaisseurs de matière sur la bordure de jante au niveau de laquelle les rayons sont fixés, ce qui nuit aux objectifs de réduction de la masse de la jante, et donc de la roue.

Depuis peu, un certain nombre de fabricants de matériels de cyclisme ont développé des roues avec des jantes en matériau composite associées à des rayons également en matériau composite auxquels des tensions de rayons beaucoup plus basses sont appliquées, permettant d'obtenir des roues très rigides.

La baisse des tensions de rayons est intéressante car le dimensionnement de la jante et du moyeu, notamment au niveau des épaisseurs de matières peut être réduit, ce qui permet d'abaisser le poids de la roue et d'obtenir un gain d'inertie en rotation considérable.

Il existe actuellement deux principales méthodes pour assembler des rayons en matériau composite à une jante et un moyeu également constitué d'un même matériau, composite ou en métal :
- le surmoulage, le co-moulage ou le collage des rayons dans la jante et le moyeu,
- la fixation des rayons fabriqués individuellement sur la jante et le moyeu avec des pièces mécaniques métalliques (tête de butée, éléments filetés).

La technique de surmoulage (EP 1 985 434), de co-moulage ou de collage (DE 10 2008 007 722, DE 10 2007 036 065 ou EP 1 759 880) est intéressante car elle permet d'obtenir une liaison mécanique légère, rigide et résistante des rayons sur la jante et le moyeu de roue.

La technique de fixation des rayons en matériau composite avec des pièces mécaniques métalliques comme proposée par les demandes de brevet EP 1 764 233, EP 1 800 897 permet d'obtenir une attache démontable et réglable mais le poids total de la roue obtenue est plus conséquent. De plus, des problèmes mécaniques de fatigue ou de dilatation différentielle peuvent intervenir dans le temps au niveau de la liaison métal / matériau composite.

Une variante technique a également été proposée dans le document FR 2933 030 pour réaliser les rayons d'une roue de vélo par laçage puis polymérisation. Toutefois, cette technique s'avère très complexe à mettre en oeuvre et la fiabilité des roues obtenues reste questionnable.

Dans le même sens, la demande de brevet FR 2 924 380 décrit une roue comportant une jante circulaire, un moyeu central à la jante et des rayons reliant le moyeu à la jante. Les rayons sont en matériaux composites, imprégnés de résine thermodurcissable ou thermoplastique.

La présente invention a pour but de proposer un nouveau type de roue de cycle comprenant une jante, un moyeu et des rayons en matériau composite, notamment à base de fibres de carbone, dont la masse, la rigidité et l'inertie en rotation sont optimisées et dont la fabrication est simple, rapide et fiable.

Un autre but de l'invention est de proposer un procédé de fabrication d'une roue de cycle constituée uniquement d'éléments en matériau composite, notamment à base de fibres de carbone, qui soit simple et fiable à mettre en oeuvre.

Ainsi, selon un premier objet, la présente invention propose une roue en particulier pour un cycle, comportant une jante circulaire, un moyeu central à la jante, et des rayons reliant ledit moyeu à ladite jante, lesdits rayons étant constitués d'un matériau composite, caractérisée en ce que les rayons sont appairés deux à deux de part et d'autre du plan médian de la roue et sont fixés sans tension à leurs extrémités sur le moyeu et sur la jante.

La roue de la présente invention présente l'avantage de présenter des rayons de matériau composite solidaires de la jante et du moyeu en leurs extrémités et dépourvus de tension. Une telle roue présente une très grande rigidité ainsi qu'une masse très faible entraînant une faible inertie en rotation comparée aux roues composites traditionnelles. De plus, la structure de rayons appairés deux à deux par rapport au plan médian de la roue permet de réduire considérablement le nombre de rayons nécessaires pour obtenir une rigidité satisfaisante de la roue; en pratique le nombre de rayons peut ainsi être réduit à 12 rayons, six pour chaque parapluie de la roue, ce qui permet encore de réduire considérablement la masse totale de la roue, permettant ainsi d'obtenir une paire de roues avant-arrière d'une masse totale de l'ordre de 1 Kg.

Conformément à une première caractéristique préférée de l'invention, la jante et le moyeu de la roue sont essentiellement, mais pas nécessairement exclusivement, constitués d'un matériau composite comportant des fibres de carbone imprégnées d'un liant thermodurcissable, par exemple une résine époxy. Un tel matériau présente l'avantage de conférer une très grande résistance en compression et traction, une très grande rigidité et une masse très faible.

Conformément à une caractéristique avantageuse, les rayons présentent une épaisseur variable sur toute leur longueur entre le moyeu et la jante. En particulier, les rayons présentent une section longitudinale sensiblement conique ou tronconique sur toute leur longueur entre le moyeu et la jante, avec une épaisseur de matière décroissante depuis le moyeu vers la jante.

De préférence, afin de conserver une bonne stabilité géométrique et une bonne résistance en compression et traction, les rayons sont collés par une résine thermodurcissable à leurs extrémités sur le moyeu et dans la jante dans des logements prévus à cet effet.

Toujours selon l'invention et dans le but de renforcer la résistance en compression et traction des couples de rayons, la jante comporte dans les zones d'insertion des rayons près du bord de fuite un renforcement d'épaisseur.

Dans un mode de réalisation particulier de la roue de l'invention, les rayons présentent une extrémité d'insertion coudée dans la jante. Une telle extrémité coudée s'avère notamment avantageuse lorsque la jante de la roue est une jante profilée.

Toujours de façon avantageuse, la roue proposée par l'invention comporte des butées de blocage des rayons au niveau des extrémités d'insertion desdits rayons dans la jante. Ces butées sont avantageusement des butées internes et externes à la jante, situées de part et d'autre du bord de fuite de la jante de façon à réaliser un blocage efficace des rayons dans la jante.

De plus, les butées de blocages sont avantageusement constituées d'un matériau composite.

De façon avantageuse encore, les rayons appairés sont solidarisés deux à deux à leurs extrémités d'insertion dans la jante par une résine thermodurcissable.

Toujours selon l'invention, les rayons sont fixés et orientés côté moyeu sur des flasques solidaires du moyeu suivant des directions radiales de la roue, perpendiculairement à l'axe du moyeu.

Une telle structure procure équilibre et rigidité à la roue, et participe à la bonne inertie en rotation de la roue.

Par ailleurs, si la roue est une roue arrière, il convient que les rayons puissent transmettre l'effort de couple du moyeu et dans ce cas au moins certains rayons, de préférence les rayons d'un même parapluie de roue, sont fixés et orientés sur un flasque de moyeu suivant une direction tangente au dit flasque de moyeu.

Selon un second objet, l'invention propose également un procédé de fabrication d'une roue telle que présentée ci-dessus, ce procédé consistant essentiellement dans les étapes suivantes :
a) installation d'une jante et d'un moyeu de roue constitués d'un matériau composite polymérisable sur un gabarit,
b) insertion des extrémités de rayons, appairés deux à deux, dans des logements formés à cet effet dans le moyeu et dans la jante,
c) injection d'un liant thermodurcissable dans les logements d'insertion des extrémités des rayons, et
d) liaison des rayons à la jante et au moyeu par polymérisation en étuve.

Diverses autres caractéristiques ressortent de la description faite ci-dessous en référence aux dessins annexés qui montrent, à titre d'exemples non limitatifs, des formes de réalisation de l'objet de l'invention.

Sur les figures :
- la **figure 1** représente en perspective une roue arrière conforme à la présente invention;
- la **figure 2** représente une vue en coupe de la roue de la figure 1 suivant un plan transversal contenant l'axe du moyeu,
- la **figure 3** représente une vue en coupe médiane de la roue de la figure 1 suivant le plan de joint de la jante, perpendiculairement à l'axe du moyeu,
- la **figure 4** représente un détail de la jonction de deux rayons dans la jante tel que représentée sur la figure 3,
- la **figure 5** représente un détail de la **figure 2** montrant l'insertion et le blocage d'un rayon à l'intérieur et à l'extérieur de la jante de la roue.

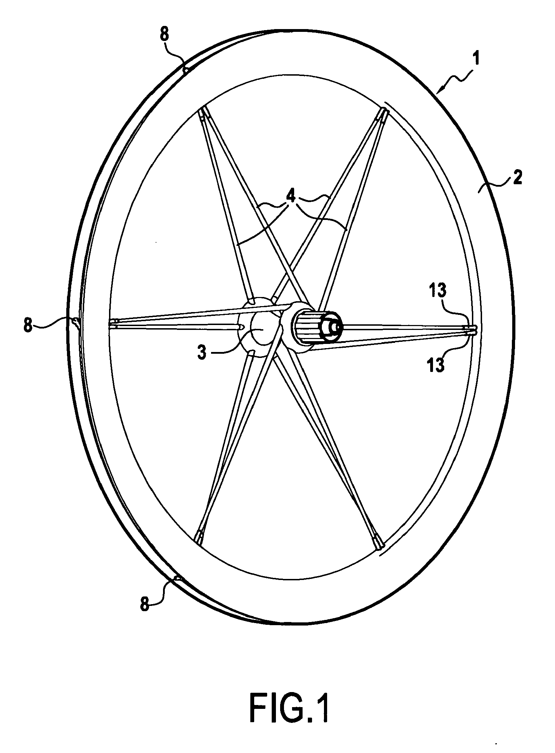

La **figure 1** représente une roue **1** de cycle conforme à la présente invention dans une forme préférée de réalisation. Elle comporte de façon classique une jante **2** profilée destinée à supporter sur sa périphérie un boyau ou un pneumatique de roulement (non représenté), un moyeu **3** disposé de façon centrale à la jante **2** et qui est destiné à permettre la fixation et la rotation de la roue **1** sur un cadre de vélo et des rayons **4** reliant le profil interne de la jante **2** au moyeu **3**.

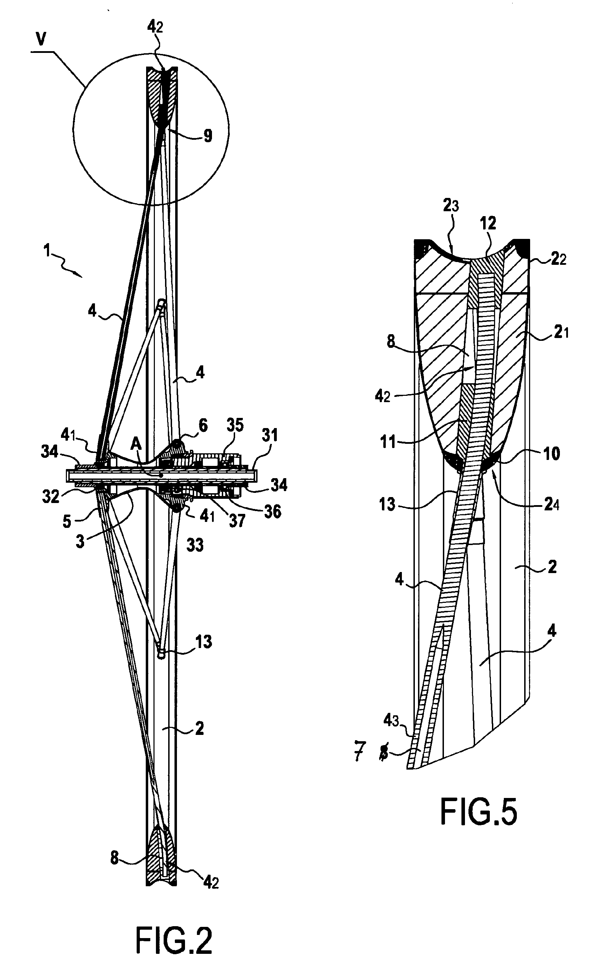

Comme représenté sur les **figures 2** et **5**, la jante **2** est constituée de préférence, de façon connue en soi, d'une âme de mousse structurale **2₁** revêtue d'un enveloppe de matériau composite **2₂** composé de nappes de fibres de carbone imprégnées de résine époxy.

Le moyeu **3** quant à lui, comme représenté sur la **figure 2**, comporte un axe central **31**, traditionnellement constitué d'aluminium aux extrémités duquel sont montés deux roulements à billes **32, 33** bloqués en translation sur l'axe **31** entre deux flasques d'extrémités **5, 6** et des écrous de montage **34** coaxiaux de l'axe **31** vers les extrémités dudit axe **31**. Le moyeu **3** comporte dans l'exemple représenté un corps de cassette **35** coaxial à l'axe **31** du moyeu pour supporter les pignons de chaîne permettant l'entraînement du vélo. Le corps de cassette **35** vient s'encastrer sur le flasque **6** et est mobile en rotation sur l'axe **31** et par rapport au flasque **6** par un roulement à billes **36** et un système de roue libre **37**, par exemple à cliquets/rochet. A l'extrémité de l'axe **31**, le corps de cassette **35** est maintenu en translation par un écrou de montage **34**. Le corps principal du moyeu **3** entre les flasques **5, 6** est formé par une enveloppe **37** formée de nappes de fibres de carbones préimprégnées de résine époxy et qui confère au moyeu **3** une extrême rigidité et résistance, notamment en torsion, flambement et cisaillement.

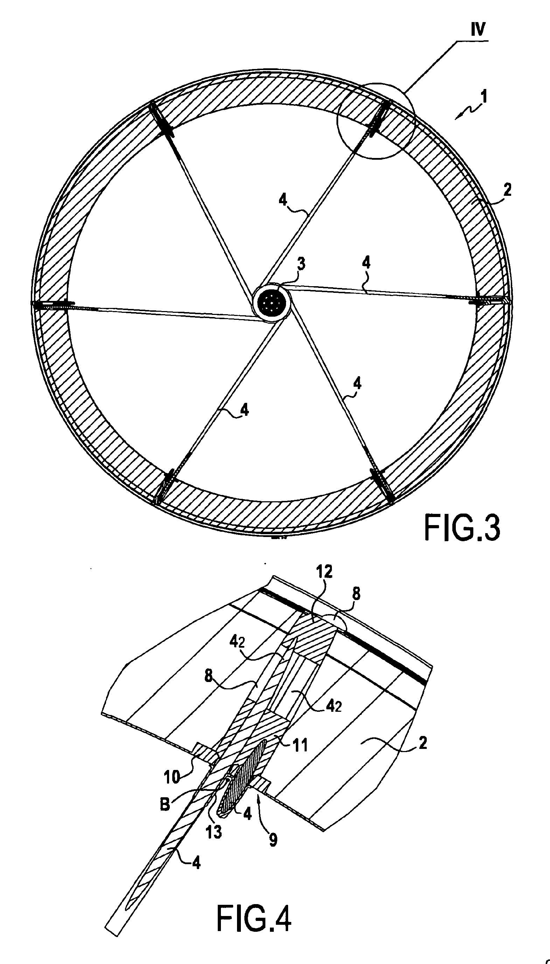

La roue **1** représentée sur les **figures 1** à **3** est une roue arrière de vélo. Toutefois, il convient de noter ici qu'une roue avant serait parfaitement identique dans sa forme exceptée au niveau du moyeu **3**, qui serait alors dépourvue de corps de cassette coaxial à l'axe **31**.

Conformément à l'invention, la roue **1** comporte des rayons **4** composites, en l'espèce constitués de fibres de carbone imprégnées de résine époxy, non tendus entre la jante **2** et le moyeu **3**. De façon originale, les rayons **4** sont en effet simplement solidarisés au moyeu **3** et à la jante **2** par collage à l'aide d'un liant thermodurcissable, par exemple une colle ou résine époxy, le cas échant renforcée de fibres de verre, sans tension.

Avantageusement, les rayons **4** sont de forme conique ou tronconique et d'épaisseur variable, de préférence décroissante depuis leur première extrémité **4₁** fixée sur le moyeu **3** jusqu'à leur seconde extrémité **4₂** insérée et fixée dans la jante **2**. Une telle forme conique favorise une bonne rigidité de la roue **1**, et une meilleure résistance des rayons **4** aux contraintes de flambement. Chaque rayon **4** conique est fabriqué unitairement à partir de nappes de fibres de carbone.

Afin d'assurer la solidité du rayon, les fibres utilisées pour former les rayons **4** ne sont pas toutes alignées dans l'axe des rayons **4** mais sont au contraire croisées. Ainsi, dans le cas de sollicitations des rayons **4** en torsion ou en cisaillement, on évite les sollicitations exclusives de la résine époxy liant les nappes de carbone mises en oeuvre.

Par ailleurs, conformément à une caractéristique avantageuse de l'invention, chaque rayon **4** est construit autour d'une âme **7** de matériau synthétique, qui facilite la mise en place des fibres de carbone et est destinée à assurer une cohésion de l'ensemble du rayon **4**. A cette fin, l'âme synthétique **7** est avantageusement choisie en polyamide. En effet, cette matière est résistante aux chocs ce qui permet, lors d'un impact sur le rayon **4** entraînant une rupture de la peau composite **4₃** de carbone, d'éviter les brisures du rayon et la conservation d'une unité de celui-ci par liaison de l'âme **7** aux morceaux de peau **4₃** composite.

Les rayons **4** sont de préférence, sur chaque roue **1**, au nombre de douze, appairés et solidarisés deux à deux en leurs extrémités fines **4₂** dans la jante **2**.

Pour la roue avant, les rayons appairés sont alors symétriques deux à deux par rapport à une ligne passant par le point **A** d'intersection du plan médian de la roue avec l'axe de la roue et le point **B** du bord de fuite équidistant de chaque rayon appairé. Ainsi appairés, les couples de rayons **4** de la roue **1** de l'invention forment l'équivalent de bâtons de roue, qui assurent une très grande rigidité de celle-ci.

La jante **2** de la roue de l'invention comporte pour permettre la fixation des rayons **4** appairés deux à deux des orifices ou logements **8** percés dans la hauteur de jante depuis la bande périphérique **2₃** de la jante jusqu'à un renfort **10** dans une zone **9** du bord de fuite de la jante. Ces renforts **10** sont formés par exemple par une surépaisseur de carbone de renforcement en traction et compression de la jante **2**. Ces orifices **8** sont percés dans la jante **2** avec une légère inclinaison par rapport au plan médian de ladite jante afin de pouvoir insérer lors de la fabrication l'extrémité fine **4₂** des rayons **4** dans la jante **2** tout en respectant l'angle de parapluie (angle d'ouverture du rayon entre la jante et le moyeu) souhaité pour la fixation de l'autre extrémité **4₁** du rayon sur le moyeu **3**.

En pratique, les angles de perçages des orifices **8** sont sensiblement égaux aux angles des axes de rayons **4** par rapport à l'axe du moyeu **3** de roue. Enfin, le diamètre de perçage des orifices **8** est choisi tel que celui-ci permette l'insertion dans la jante des extrémités **4₂** des rayons **4** appairés ainsi que l'injection, après mise en place des rayons, de deux bouchons de résine **11, 12** destinés à solidariser les extrémités **4₂** des rayons **4** entre elles dans la jante **2** et lesdites extrémités à la jante elle-même, le bouchon **11** formant une butée interne de blocage des rayons **4** dans la jante **2**, tandis que le bouchon **12** forme un ancrage des extrémités **4₂** des rayons sur la bande périphérique **2₃ de** la jante **2**.

La jante **2** de la roue **1** de la présente invention peut-être une jante classique ou bien, comme représenté sur les **figures 1** à **5**, une jante profilée. Une telle jante profilée présente de façon traditionnelle une hauteur de jante supérieure aux jantes classiques, en pratique de l'ordre de 4 à 8 cm de hauteur en général. Une telle hauteur de jante vise à améliorer l'aérodynamisme des roues. Cependant, dans le cadre de l'invention, une telle hauteur de jante s'avère problématique. En effet, avec ce type de jantes à «haut profil» l'angle formé entre un rayon **4** et le plan médian de la jante est supérieur à l'angle maximum compris entre l'axe de l'orifice **8** pouvant être réalisé dans la jante **2** et le plan médian de la jante. Ainsi, un rayon **4** droit ne peut pas traverser complètement la jante **2**.

Pour résoudre ce problème, l'invention propose de façon avantageuse d'utiliser, comme cela ressort des **figures 2** et **5** notamment, un rayon **4** avec une extrémité **4₂** non droite, et concrètement coudée, qui compense la différence d'angle d'inclinaison entre l'axe du rayon **4** sur sa partie principale droite et l'axe de perçage de l'orifice **8** dans la jante profilée. La portion coudée du rayon est alors localisée sensiblement au milieu de l'orifice **8** de montage du rayon dans la jante, pour ne pas créer une concentration de contraintes à la transition rayon/jante lorsque le rayon **4** est soumis à des contraintes.

Cette extrémité **4₂** de rayon **4** coudée permet aussi d'atténuer les contraintes du rayon collé dans la jante **2** car celle-ci ne se trouve plus dans l'axe principal du rayon entre la jante **2** et le moyeu **3**.

Quelque soit le type de jante **2**, la roue **1** de l'invention comporte enfin également des butées de blocage externe **13** des extrémités des rayons **4** sur la jante **2**. Ces butées **13**, constituées de matières composites, sont avantageusement surmoulées sur les rayons **4** à la jointure de ceux-ci et du bord de fuite de la jante, en appui sur les renforts **10** de jante. Ces butées externes **13** renforcent notamment la fixation des rayons sur la jante **2** pour supporter les efforts de compression des rayons, quand les butées internes **11** renforcent elles la liaison jante/rayons pour supporter les efforts de traction des rayons **4** sur la jante **2**.

Pour faciliter une parfaite qualité de fabrication de la roue de l'invention **1** ainsi qu'une grande capacité de réparation de celle-ci, chaque composant (jante **2**, moyeu **3**, rayons **4**) de ladite roue **1** est fabriqué individuellement. Une fois fabriqués, lesdits composants sont ensuite assemblés les uns aux autres pour réaliser la roue **1**. Cet assemblage est de préférence réalisé manuellement sur un gabarit de montage adapté, par collage des rayons **4** dans la jante **2** et sur le moyeu **3**. Ce procédé de montage a été conçu par les inventeurs pour être le plus simple possible en termes de nombre d'opérations et de facilité de mise en oeuvre. L'utilisation de pièces métalliques est évitée au maximum.

Le procédé se déroule la manière suivante :
a) installation d'une jante **2** et d'un moyeu **3** de roue constitués d'un matériau composite sur un gabarit,
b) insertion des extrémités de rayons **4** constitués d'un matériau composite, appairés deux à deux, dans les logements **8** formés à cet effet dans le moyeu et la jante, formant deux parapluies de rayons,
c) injection d'un liant thermodurcissable dans les logements d'insertion des extrémités des rayons, et
d) liaison des rayons à la jante et au moyeu par polymérisation en étuve.

Le procédé de fabrication de roue de l'invention permet d'obtenir une paire de roues **1** d'une masse totale de l'ordre de 1000g, pour des jantes **2** d'une hauteur de 45 mm. Ceci représente un gain moyen de 250g sur la paire de roues par rapport à des roues équipées de jantes identiques rayonnées avec des rayons en acier inoxydable.

De plus, toujours par rapport à des roues équipées de jantes et moyeux identiques mais rayonnées avec des rayons métalliques, le gain en rigidité latérale obtenu sur les roues **1** de l'invention est d'au moins 25% et le gain en inertie en rotation d'au moins 8%.

## Revendications

1. Roue (1), en particulier pour un cycle, comportant une jante circulaire (2), un moyeu (3) central à la jante, et des rayons (4) reliant ledit moyeu (3) à ladite jante (2), lesdits rayons étant constitués d'un matériau composite polymérisé, **caractérisée en ce que** les rayons (4) sont appairés deux à deux de part et d'autre du plan médian de la roue et sont fixés sans tension à leurs extrémités sur le moyeu (3) et sur la jante (2), lesdits rayons étant solidarisés l'un à l'autre à leur extrémité à l'intérieur de la jante.

2. Roue selon la revendication 1, **caractérisée en ce que** les rayons (4) présentent une épaisseur variable sur toute leur longueur entre le moyeu et la jante.

3. Roue selon l'une des revendications 1 ou 2, **caractérisée en ce que** les rayons présentent une section longitudinale sensiblement conique ou tronconique sur toute leur longueur entre le moyeu et la jante.

4. Roue selon l'une des revendications 1 à 3, **caractérisée en ce que** les rayons sont collés par une résine thermodurcissable à leurs extrémités (4₁, 4₂) sur le moyeu et dans la jante dans des logements prévus à cet effet.

5. Roue selon l'une des revendications 1 à 4, **caractérisé en ce qu'**elle comporte des butées de blocage des rayons à l'insertion dans la jante.

6. Roue selon la revendication 5, **caractérisée en ce qu'**elle comporte des butées (11, 13) internes et externes à la jante de blocage des rayons dans la jante.

7. Roue selon l'une des revendications 5 ou 6, **caractérisée en ce que** les butées de blocage sont constituées de matières composites.

8. Roue selon l'une des revendications 1 à 7, **caractérisé en ce que** la jante comporte dans les zones d'insertion (9) des rayons un renforcement (10) d'épaisseur.

9. Roue selon l'une des revendications 1 à 8, **caractérisée en ce que** les rayons présentent une extrémité (4₂) coudée d'insertion dans la jante.

10. Roue selon l'une des revendications 1 à 9, **caractérisée en ce que** les rayons (4) appairés sont solidarisés deux à deux à leurs extrémités (4₂) dans la jante (2) par une résine thermodurcissable.

11. Roue selon l'une des revendications 1 à 10, **caractérisée en ce que** les rayons (4) sont fixés et orientés côté moyeu (3) sur des flasques solidaires (5, 6) du moyeu suivant des directions radiales de la roue, perpendiculairement à l'axe du moyeu.

12. Roue selon l'une des revendications 1 à 11, **caractérisé en ce que** au moins certains rayons (4), de préférence les rayons d'un même parapluie de roue, sont fixés et orientés sur un dit flasque (6) de moyeu suivant une direction tangente au dit flasque de moyeu.

13. Roue selon l'une des revendications 1 à 12, **caractérisé en ce que** les rayons, la jante et le moyeu de la roue sont constitués d'un matériau composite comportant des fibres de carbone imprégnées d'un liant thermodurcissable.

14. Procédé de réalisation d'une roue (1) conforme à l'une des revendications 1 à 13, ladite roue comportant une jante, un moyeu et des rayons fabriqués indépendamment les uns des autres, le procédé comportant les étapes suivantes :
a) installation d'une jante (2) et d'un moyeu (3) de roue constitués d'un matériau composite sur un gabarit,
b) insertion des extrémités de rayons (4) constitués d'un matériau composite, appairés deux à deux, dans des logements formés à cet effet dans le moyeu et la jante, formant deux parapluies de rayons,
c) injection d'un liant thermodurcissable dans les logements d'insertion des extrémités des rayons, et
d) liaison des rayons à la jante et au moyeu par polymérisation en étuve.

## Patentansprüche

1. Rad (1), insbesondere für ein Fahrrad, umfassend eine kreisförmige Felge (2), eine in der Mitte der Felge befindliche Nabe (3) sowie Speichen (4), welche die Nabe (3) mit der Felge (2) verbinden, wobei die Speichen aus einem polymerisierten Verbundwerkstoff ausgebildet sind, **dadurch gekennzeichnet, dass** die Speichen (4) auf beiden Seiten der Mittelebene des Rades paarweise angeordnet sind und an ihren Enden an der Nabe (3) und an der Felge (2) spannungsfrei befestigt sind, wobei die Speichen an ihrem Ende innerhalb der Felge fest miteinander verbunden sind.

2. Rad nach Anspruch 1, **dadurch gekennzeichnet, dass** die Speichen (4) über ihre gesamte Länge zwischen der Nabe und der Felge eine variable Dicke aufweisen.

3. Rad nach einem der Ansprüche 1 oder 2, **dadurch gekennzeichnet, dass** die Speichen über ihre gesamte Länge zwischen der Nabe und der Felge einen im Wesentlichen konischen oder kegelstumpfförmigen Längschnitt aufweisen.

4. Rad nach einem der Ansprüche 1 bis 3, **dadurch gekennzeichnet, dass** die Speichen an ihren Enden (4₁, 4₂) durch einen Duroplast an der Nabe und in der Felge in zu diesem Zweck vorgesehenen Aufnahmen festgeklebt sind.

5. Rad nach einem der Ansprüche 1 bis 4, **dadurch gekennzeichnet, dass** es Anschläge zum Blockieren der Speichen bei Einfügen in die Felge umfasst.

6. Rad nach Anspruch 5, **dadurch gekennzeichnet, dass** es Anschläge (11, 13) innerhalb und außerhalb der Felge zum Blockieren der Speichen in der Felge umfasst.

7. Rad nach einem der Ansprüche 5 oder 6, **dadurch gekennzeichnet, dass** die Blockieranschläge aus Verbundwerkstoffen ausgebildet sind.

8. Rad nach einem der Ansprüche 1 bis 7, **dadurch gekennzeichnet, dass** die Felge in den Bereichen zum Einfügen (9) der Speichen eine Dickenverstärkung (10) umfasst.

9. Rad nach einem der Ansprüche 1 bis 8, **dadurch gekennzeichnet, dass** die Speichen ein gebogenes Ende (4₂) zum Einfügen in die Felge umfassen.

10. Rad nach einem der Ansprüche 1 bis 9, **dadurch gekennzeichnet, dass** die paarig angeordneten Speichen (4) an ihren Enden (4₂) in der Felge (2) durch einen Duroplast paarweise fest verbunden sind.

11. Rad nach einem der Ansprüche 1 bis 10, **dadurch gekennzeichnet, dass** die Speichen (4) nabenseitig (3) an mit der Nabe fest verbundenen Flanschen (5, 6), in radialen Richtungen des Rades, senkrecht zur Achse der Nabe befestigt und ausgerichtet sind.

12. Rad nach einem der Ansprüche 1 bis 11, **dadurch gekennzeichnet, dass** wenigstens einige Speichen (4), vorzugsweise die Speichen eines gleichen Radschirms, an einem Nabenflansch (6) in einer zu dem Nabenflansch tangentialen Richtung befestigt und ausgerichtet sind.

13. Rad nach einem der Ansprüche 1 bis 12, **dadurch gekennzeichnet, dass** die Speichen, die Felge und die Nabe des Rades aus einem Verbundwerkstoff, der mit einem warmaushärtenden Bindemittel imprägnierte Kohlenstofffasern umfasst, ausgebildet sind.

14. Verfahren zur Herstellung eines Rades (1) nach einem der Ansprüche 1 bis 13, wobei das Rad eine Felge, eine Nabe und Speichen, die unabhängig voneinander hergestellt werden, umfasst, wobei das Verfahren die folgenden Schritte umfasst:
a) Anbringen einer Felge (2) und einer Nabe (3) eines Rades, die aus einem Verbundwerkstoff ausgebildet sind, an einer Schablone,
b) Einfügen der Enden von aus einem Verbundwerkstoff ausgebildeten, paarweise angeordneten Speichen (4) in Aufnahmen, die zu diesem Zweck in der Nabe und der Felge gebildet sind, wodurch zwei Speichenschirme gebildet werden,
c) Einspritzen eines warmaushärtenden Bindemittels in die Aufnahmen zum Einfügen der Enden der Speichen und
d) Verbinden der Speichen mit der Felge und mit der Nabe durch Polymerisation im Trockenofen.

## Claims

1. Wheel (1), for a cycle in particular, including a circular rim (2), a hub (3) concentric with the rim, and spokes (4) connecting said hub (3) to said rim (2), said spokes being made of a polymerized composite material, **characterized in that** the spokes (4) are paired two by two on either side of the median plane of the wheel and are bonded without tension at their ends onto the hub (3) and onto the rim (2), said spokes being bonded together at their end that is inside the rim.

2. The wheel according to Claim 1, **characterized in that** the spokes (4) exhibit variable thickness over their entire length between the hub and the rim.

3. A wheel according to one of Claims 1 or 2, **characterized in that** the spokes exhibit a longitudinal section that is substantially conical or frustoconical over their entire length between the hub and the rim.

4. A wheel according to one of Claims 1 through 3, **characterized in that** the spokes are adhesive bonded by a thermosetting resin at their ends (4₁, 4₂) onto the hub and into the rim in recesses provided for this purpose.

5. A wheel according to one of Claims 1 through 4, **characterized in that** it includes stops for blocking the spokes upon insertion into the rim.

6. The wheel according to Claim 5, **characterized in that** it includes stops (11, 13) internal and external to the rim for blocking the spokes within the rim.

7. A wheel according to one of Claims 5 or 6, **characterized in that** the blocking stops are made of composite material.

8. A wheel according to one of Claims 1 through 7, **characterized in that** the rim includes, in the spoke insertion areas (9), a thickness reinforcement (10).

9. A wheel according to one of Claims 1 through 8, **characterized in that** the spokes have a bent end (4₂) for insertion into the rim.

10. A wheel according to one of Claims 1 through 9, **characterized in that** the paired spokes (4) are bonded two by two at their ends (4₂) inside the rim (2) by a thermosetting resin.

11. A wheel according to one of Claims 1 through 10, **characterized in that** the spokes (4) are attached and oriented at the hub (3) end onto flanges (5, 6) bonded to the hub, along directions radial to the wheel, perpendicular to the hub axis.

12. A wheel according to one of Claims 1 through 11, **characterized in that** at least certain spokes (4), preferably spokes in the same umbrella array of the wheel, are attached and oriented on a said hub flange (6) along a direction tangent to said hub flange.

13. A wheel according to one of Claims 1 through 12, **characterized in that** the spokes, the rim and the hub of the wheel are made of composite material including carbon fibers impregnated with a thermosetting binder.

14. Method for manufacturing a wheel (1) conforming to one of Claims 1 through 13, said wheel including a rim, a hub and spokes manufactured independently of one another, the method comprising the following steps:
a) installation of a wheel rim (2) and hub (3) made of composite material onto a jig,
b) insertion of the ends of spokes (4) made of a composite material, paired two by two, into recesses made for this purpose in the hub and the rim, constituting two umbrella arrays of spokes,
c) injection of a thermosetting binder into the recesses for insertion of the ends of the spokes, and
d) connection of the spokes to the rim and to the hub by polymerization in an autoclave.
